(19)

**Europäisches Patentamt**
**European Patent Office**
**Office européen des brevets**

(11) **EP 3 156 981 A1**

(12) **EUROPEAN PATENT APPLICATION**
published in accordance with Art. 153(4) EPC

(43) Date of publication:
**19.04.2017 Bulletin 2017/16**

(21) Application number: **14894534.8**

(22) Date of filing: **20.10.2014**

(51) Int Cl.:
**G07D 7/00** (2016.01)   **G06K 9/00** (2006.01)

(86) International application number:
**PCT/CN2014/088898**

(87) International publication number:
**WO 2015/188556 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2014   CN 201410263710**

(71) Applicant: **GRG Banking Equipment Co., Ltd.**
**Guangzhou, Guangdong 510663 (CN)**

(72) Inventors:
• **ZHENG, Weirui**
**Guangzhou**
**Guangdong 510663 (CN)**

• **XIAO, Zhuming**
**Guangzhou**
**Guangdong 510663 (CN)**
• **GUAN, Yuping**
**Guangzhou**
**Guangdong 510663 (CN)**
• **LIU, Guanglu**
**Guangzhou**
**Guangdong 510663 (CN)**

(74) Representative: **Lorenz & Kopf PartG mbB**
**Patentanwälte,**
**LKGLOBAL**
**Brienner Straße 11**
**80333 München (DE)**

(54) **MULTI-CUE FUSION BASED TICKET POSITIONING RECOGNITION METHOD AND SYSTEM**

(57)     A multi-cue fusion based ticket positioning recognition method and system, utilizing the coordinate mapping relationship between a one-dimensional MICR magnetic signal and a ticket OCR image signal to convert the processing data with high credibility in the MICR signal recognition module into parameters suitable for the OCR signal recognition module through geometric conversion, thus improving OCR character positioning efficiency and reliability, saving operation time and improving OCR recognition precision, and improving the accuracy and processing efficiency of a character recognition system.

Fig. 1

Printed by Jouve, 75001 PARIS (FR)

**Description**

**FIELD**

The present disclosure relates to the technical field of financial self-service apparatus, especially to a bill positioning and identification method based on multi-cue combination and a system thereof.

**BACKGROUND**

Today, with the rapid development of the internet, the capital flow grows rapidly in quantity, and is more flexible and secretive. The internet brings a great convenience to the capital operations, and a great challenge to the capital management. Bills play an important role in the capital operation, each bill has a unique serial number including a series of characters. The serial number is a symbol of an identity of the bill, and is provided with features of fraud prevention, unified management and traceability in flowing. Thus, recording the serial number of a bill effectively and accurately is a great help to an efficient management of the bill.

Generally, a conventional financial self-service apparatus has an identification system which can perform a serial number identification on a bill. How to acquire a serial number signal depends on a technological means used when printing the serial number, and the serial number signal collection generally includes MICR (Magnetic Ink Character Identification) magnetic signal collection and OCR (Optical Character Identification) optical signal collection. Accordingly, an MICR identification unit and an OCR identification unit are provided, where the MICR identification unit and the OCR identification unit each can function as an identification unit in the identification system independently, or the MICR identification unit and the OCR identification unit may be combined together to form a mixed identification unit in the identification system.

Currently, in order to improve an accuracy of the bill serial number identification, a mixed identification unit is commonly used. Each serial number identification unit in the mixed identification unit includes a character detection and positioning module, a character segmentation module, a character feature extraction module and a character classification determination module. Thus, for each identification unit in the mixed identification unit, a collected signal is processed by the four modules, and respective output results are processed with simple combination and determination. Such a mixed identification unit not only has a large time expense, but also fails to fully exploit and utilize abundant signal resources, which leads to that an efficiency of the whole identification system is low.

**SUMMARY**

A bill positioning and identification method based on multi-cue combination and a system thereof are provided according to the embodiments of the invention, in which a character positioning method is improved by utilizing a coordinate mapping relationship between a one-dimensional MICR magnetic signal and a bill OCR image signal, and an efficiency and a reliability of OCR character positioning are improved, thereby saving a computation time and improving an OCR identification precision, consequently improving an accuracy and a processing efficiency of a character identification system.

The bill positioning and identification method based on multi-cue combination provided according to the embodiments of the invention includes:

> step S1 including collecting an MICR magnetic signal and a CIS (Contact Image Sensor) image signal of an input bill, to obtain collected information;

> step S2 including performing, by a serial number detection unit in an MICR identification module, a serial number detection on the collection information, to obtain a character string geometric position parameter;

> step S3 including performing, by a character segmentation unit in the MICR identification module, a character segmentation on the character string geometric position parameter, to obtain character geometric position parameters;

> step S4 including performing, by a character feature extraction unit in the MICR identification module, a character feature extraction on the character geometric position parameters, to obtain feature characters;

> step S5 including performing, by a character classification determination unit in the MICR identification module, a classification determination on the feature characters, to obtain and store an MICR evaluation score;

step S6 including performing a geometric conversion on the character string geometric position parameter and the character geometric position parameters, to obtain an OCR character string geometric position parameter adapted to a serial number detection unit in an OCR identification module and OCR character geometric position parameters adapted to a character segmentation unit in the OCR identification module, respectively;

step S7 including performing, by a character feature extraction unit in the OCR identification module, a character feature extraction on the OCR character geometric position parameters, to obtain OCR feature characters;

step S8 including performing, by a character classification determination unit in the OCR identification module, a classification determination on the OCR feature characters, to obtain and store an OCR evaluation score;

step S9 including obtaining a character identification result based on the MICR evaluation score and the OCR evaluation score; and

step S10 including obtaining an input bill identification result based on the character identification result, and processing the input bill based on the input bill identification result.

Preferably, before step S1, the method further includes:

detecting whether the input bill reaches a collection position, and triggering a signal collection in a case the input bill reaches the collection position.

Preferably,
before the step of detecting whether the input bill reaches the collection position, the method further includes:

performing a skew rectification on the input bill.

After step S1 and before step S2, the method further includes:

performing an overlap detection on the input bill, and performing a bill overlap processing on the input bill in a case the input bill is overlapped, otherwise performing step S2.

Preferably,
step S9 includes:

calculating confidences of identifications of the input bill by the MICR identification module and the OCR identification module; and

determining an evaluation score of an identification module with a higher confidence to be a character identification result of the input bill.

Preferably,
step S10 includes:

performing an authenticity verification on the character identification result to obtain an input bill identification result; and

accepting the input bill in a case the input bill identification result is true, otherwise performing a rejection operation.

The bill positioning and identification system based on multi-cue combination provided according to an embodiment of the invention includes:

a signal collection device, including a collection module and configured to collect an MICR magnetic signal and a CIS image signal of an input bill to obtain collection information;

a signal identification device, connected to the signal collection device and including an MICR signal identification module and an OCR signal identification module,

where the MICR signal identification module includes a serial number detection unit, a character segmentation unit, a character feature extraction unit and a classification determination unit; where the serial number detection unit is configured to perform a serial number detection on the collection information, to obtain a character string geometric position parameter; the character segmentation unit is configured to perform a character segmentation on the character string geometric position parameter, to obtain character geometric position parameters; the character feature extraction unit is configured to perform a character feature extraction on the character geometric position parameters, to obtain feature characters; and the classification determination unit is configured to perform a classification determination on the feature characters, to obtain and store an MICR evaluation score; and

where the OCR signal identification module includes a geometric conversion unit, a serial number detection unit, a character segmentation unit, a character feature extraction unit and a classification determination unit; where the geometric conversion unit is configured to perform a geometric conversion on the character string geometric position parameter and the character geometric position parameters, to obtain an OCR character string geometric position parameter adapted to the serial number detection unit in the OCR signal identification module and OCR character geometric position parameters adapted to the character segmentation unit in the OCR signal identification module; the character feature extraction unit is configured to perform a character feature extraction on the OCR character geometric position parameters, to obtain OCR feature characters, and the classification determination unit is configured to perform a classification determination on the OCR feature characters, to obtain and store an OCR evaluation score; and

a processing device, connected to the signal identification device and configured to obtain an input bill identification result based on the character identification result and process the input bill based on the input bill identification result.

Preferably,
the signal collection device further includes:

a detection module, configured to detect whether the input bill reaches a collection position and trigger a signal collection in a case the input bill reaches the collection position.

Preferably,
the signal collection device further includes:

a skew rectification module, configured to perform a skew rectification on the input bill.

Preferably,
the signal collection module further includes:

an overlap detection module, configured to perform an overlap detection on the input bill.

According to the bill positioning and identification method based on multi-cue combination and the system thereof provided in the embodiments of the invention, by utilizing a coordinate mapping relationship between a one-dimensional MICR magnetic signal and a bill OCR image signal, processed data with a higher confidence in the MICR signal identification module is converted into parameters applicable to the OCR signal identification module by geometric conversion, thereby improving an efficiency and a reliability of OCR character positioning, consequently saving a computation time and improving an OCR identification precision, and improving an accuracy and a processing efficiency of a character identification system.

**BRIEF DESCRIPTION OF THE DRAWINGS**

The drawings to be used in the descriptions of embodiments of the invention or conventional technology are described briefly as follows, so that technical solutions according to the embodiments of the invention or conventional technology may become clearer. Apparently, the drawings in the following descriptions only illustrate some embodiments of the invention. For those in the art, other drawings may be obtained based on these drawings without any creative work.

Figure 1 is a flowchart of a bill positioning and identification method based on multi-cue combination according to a first embodiment of the invention;

Figure 2 is a flowchart of a bill positioning and identification method based on multi-cue combination according to a second embodiment of the invention;

Figure 3 is a first structural diagram of a bill positioning and identification system based on multi-cue combination according to an embodiment of the invention; and

Figure 4 is a second structural diagram of a bill positioning and identification system based on multi-cue combination according to an embodiment of the invention.

**DETAILED DESCRIPTION**

A bill positioning and identification method based on multi-cue combination and a system thereof are provided according to the embodiments of the invention, in which a character positioning method is improved by utilizing a coordinate mapping relationship between a one-dimensional MICR magnetic signal and a bill OCR image signal, and an efficiency and a reliability of OCR character positioning are improved, thereby saving a computation time and improving an OCR identification precision, consequently improving an accuracy and a processing efficiency of a character identification system.

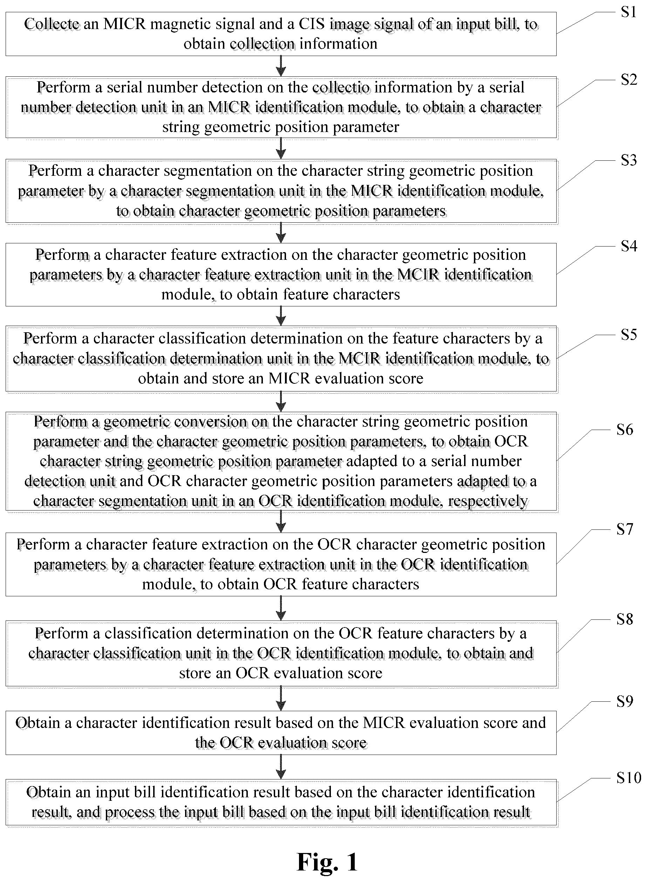

As illustrated in Figure 1, a bill positioning and identification method based on multi-cue combination according to a first embodiment of the invention includes steps S1 to S10.

Step S1 includes collecting an MICR magnetic signal and a CIS image signal of an input bill, to obtain collection information.

After a bill enters an collection device, an MICR magnetic signal and a CIS image signal of the input bill can be collected, to obtain collection information

Step S2 includes performing a serial number detection on the collection information by a serial number detection unit in an MICR identification module, to obtain a character string geometric position parameter.

After the collection information is obtained, a serial number detection may be performed on the collection information by a serial number detection unit in an MICR identification module, to obtain a character string geometric position parameter.

Step S3 includes performing a character segmentation on the character string geometric position parameter by a character segmentation unit in the MICR identification module, to obtain character geometric position parameters.

After the character string geometric position parameter is obtained, a character segmentation can be performed on the character string geometric position parameter by a character segmentation unit in the MICR identification module, to obtain character geometric position parameters.

Step S4 includes performing a character feature extraction on the character geometric position parameters by a character feature extraction unit in the MCIR identification module, to obtain feature characters.

After the character geometric position parameters are obtained, a character feature extraction may be performed on the character geometric position parameters by a character feature extraction unit in the MCIR identification module, to obtain feature characters.

Step S5 includes performing a classification determination on the feature characters by a character classification determination unit in the MICR identification module, to obtain an MICR evaluation score, and the same is stored.

After the feature characters are obtained, a classification determination may be performed on the feature characters by a character classification determination unit in the MICR identification module, to obtain an MICR evaluation score, and the same is stored.

Step S6 includes performing geometric conversion on the character string geometric position parameter and the character geometric position parameters, to obtain an OCR character string geometric position parameter adapted to a serial number detection unit in an OCR identification module and OCR character geometric position parameters adapted to a character segmentation unit in the OCR identification module, respectively.

After step S5 is performed, by geometric conversion, the character string geometric position parameter and the character geometric position parameters may be converted into OCR character string geometric position parameter adapted to a serial number detection unit and OCR character geometric position parameters adapted to a character segmentation unit in an OCR identification module, respectively.

Step S7 includes performing a character feature extraction on the OCR character geometric position parameters by a character feature extraction unit in the OCR identification module, to obtain OCR feature characters.

A character feature extraction may be performed on the OCR character geometric position parameters by a character feature extraction unit in the OCR identification module, to obtain OCR feature characters.

Step S8 includes performing a classification determination on the OCR feature characters by a character classification determination unit in the OCR identification module, to obtain an OCR evaluation score, and the same is stored.

After the OCR feature characters are obtained, a classification determination can be performed on the OCR feature characters by a character classification determination unit in the OCR identification module, to obtain an OCR evaluation score, and the same is stored.

Step S9 includes obtaining a character identification result based on the MICR evaluation score and the OCR evaluation score.

After the MICR evaluation score and the OCR evaluation score are obtained, a character identification result can be obtained based on the MICR evaluation score and the OCR evaluation score.

Step S10 includes obtaining an input bill identification result based on the character identification result, and processing the input bill based on the input bill identification result.

According to the bill positioning and identification method based on multi-cue combination provided in the embodiment of the invention, by utilizing a coordinate mapping relationship between a one-dimensional MICR magnetic signal and a bill OCR image signal, processed data with a higher confidence in the MICR signal identification module is converted into parameters applicable to the OCR signal identification module by geometric conversion, thereby improving an efficiency and a reliability of OCR character positioning, consequently saving a computation time and improving an OCR identification precision, and improving an accuracy and a processing efficiency of a character identification system.

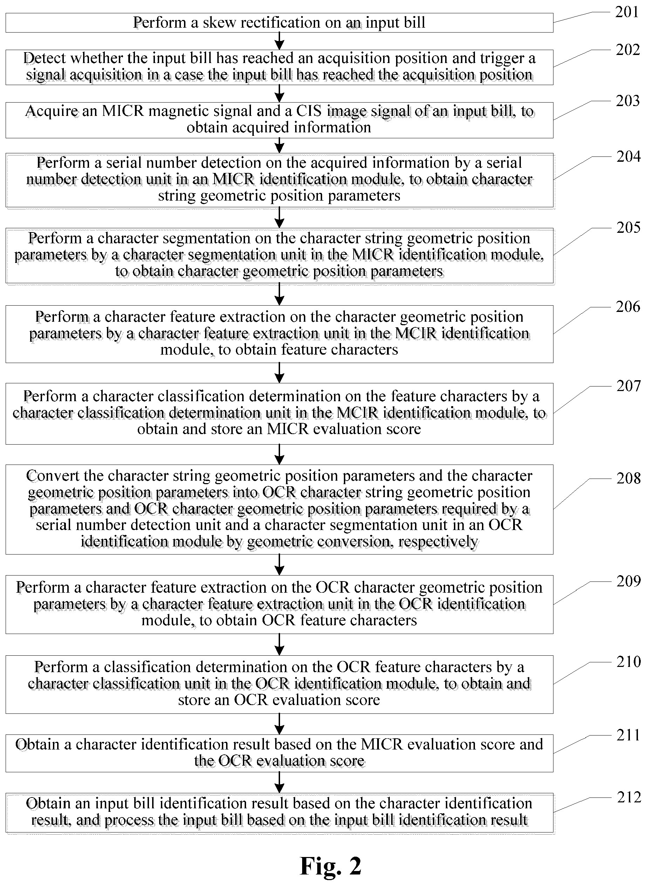

The bill positioning and identification method based on multi-cue combination according to the first embodiment of the invention is described briefly above. Hereinafter, a bill positioning and identification method based on multi-cue combination according to a second embodiment of the invention is described in detail. As illustrated in Figure 2, the bill positioning and identification method based on multi-cue combination according to the second embodiment of the invention includes steps 201 to 213.

Step 201 includes performing a skew rectification on an input bill.

When a bill is entering a collection device, a case of ingoing direction deviation may occur, which leads to that the bill can not enter the collection device correctly. Thus, a skew rectification can be performed on the bill before the bill enters the collection device.

Step 202 includes detecting whether the input bill has reached a collection position and triggering a signal collection in a case the input bill has reached the collection position.

While the input bill on which the skew rectification has been performed is moving towards the collection device, the collection device may detect whether the input bill has reached a collection position in a real-time manner, and trigger a signal collection after the input bill reaches the collection position.

Step 203 includes collecting an MICR magnetic signal and a CIS image signal of the input bill, to obtain collection information.

After the input bill reaches the collection position, the collection device starts operating to collect an MICR magnetic signal and a CIS image signal of the input bill, to obtain collection information.

Step 204 includes performing an overlap detection on the input bill, and performing a bill overlap processing on the input bill in a case the input bill is overlapped, otherwise performing step 205.

After the collection information is obtained, an overlap detection may be performed on the input bill, and a bill overlap processing may be performed on the input bill in a case the input bill is overlapped, otherwise step 205 is performed.

Step 205 includes performing a serial number detection on the collection information by a serial number detection unit in an MICR identification module, to obtain a character string geometric position parameter.

After the overlap detection is performed on the input bill, a serial number detection can be performed on the collection information by a serial number detection unit in an MICR identification module, to obtain a character string geometric position parameter. A time period needed by the serial number detection unit above is $T_{M(1)}$, and a confidence of the detection is $p_{M(1)}$.

Step 206 includes performing a character segmentation on the character string geometric position parameter by a character segmentation unit in the MICR identification module, to obtain character geometric position parameters.

After the character string geometric position parameter is obtained, a character segmentation may be performed on the character string geometric position parameter by a character segmentation unit in the MICR identification module, to obtain character geometric position parameters. A time period needed by the character segmentation unit above is $T_{M(2)}$, and a confidence of the character segmentation is $p_{M(2)}$.

Step 207 includes performing a character feature extraction on the character geometric position parameters by a character feature extraction unit in the MICR identification module, to obtain feature characters.

After the character geometric position parameters are obtained, a character feature extraction can be performed on the character geometric position parameters by a character feature extraction unit in the MICR identification module, to obtain feature characters. A time period needed by the character feature extraction unit above is $T_{M(3)}$, and a confidence of the character segmentation is $p_{M(3)}$.

Step 208 includes performing a classification determination on the feature characters by a character classification determination unit in the MICR identification module, to obtain an MICR evaluation score, and the same is stored.

After the feature characters are obtained, a classification determination can be performed on the feature characters by a character classification determination unit in the MICR identification module, to obtain an MICR evaluation score, and the same is stored. A time period needed by the classification determination unit above is $T_{M(4)}$, and a confidence of the character classification determination is $p_{M(4)}$.

Step 209 includes performing geometric conversion on the character string geometric position parameter and the character geometric position parameters, to obtain an OCR character string geometric position parameter and OCR character geometric position parameters, respectively, where the OCR character geometric position parameters are adapted to a serial number detection unit and the OCR character geometric position parameters are adapted to a character segmentation unit in an OCR identification module.

After step S5 is performed, by geometric conversion, the character string geometric position parameters and the character geometric position parameters may be converted into OCR character string geometric position parameter adapted to a serial number detection unit and OCR character geometric position parameters adapted to a character segmentation unit in an OCR identification module, respectively. A time period needed by the process above is $T_{O(M)}$, and a confidence thereof is $p_{O(M)}$ ($p_{O(M)} = p_{M(1)}{}^* p_{M(2)}$).

Step 210 includes performing a character feature extraction on the OCR character geometric position parameters by a character feature extraction unit in the OCR identification module, to obtain OCR feature characters.

A character feature extraction may be performed on the OCR character geometric position parameters by a character feature extraction unit in the OCR identification module, to obtain OCR feature characters. A time period needed by the character feature extraction unit in the OCR identification module above is $T_{O(3)}$, and a confidence thereof is $p_{O(3)}$.

Step 211 includes performing a classification determination on the OCR feature characters by a character classification determination unit in the OCR identification module, to obtain an OCR evaluation score, and the same is stored.

After the OCR feature characters are obtained, a classification determination may be performed on the OCR feature characters by a character classification determination unit in the OCR identification module, to an OCR evaluation score, and the same is stored. A time period needed by the character classification determination unit in the OCR identification module above is $T_{O(4)}$, and a confidence thereof is $p_{O(4)}$.

Step 212 includes obtaining a character identification result based on the MICR evaluation score and the OCR evaluation score.

After the MICR evaluation score and the OCR evaluation score are obtained, a character identification result may be obtained based on the MICR evaluation score and the OCR evaluation score.

Step 212 may include: calculating confidences of identifications of the input bill by the MICR identification module and the OCR identification module; and determining an evaluation score of an identification module with a higher confidence to be a character identification result of the input bill.

Step 213 includes obtaining an input bill identification result based on the character identification result, and processing the input bill based on the input bill identification result.

After the character identification result is obtained, an input bill identification result may be obtained based on the character identification result, and the input bill may be processed based on the input bill identification result.

Step 213 may include: performing an authenticity verification on the character identification result to obtain an input bill identification result; and accepting the input bill in a case the input bill identification result is true, otherwise returning the input bill.

The bill positioning and identification method based on multi-cue combination according to the present disclosure is analyzed in detail hereinafter.

There is a correlation between an MICR magnetic signal and an OCR optical signal in geometric forms, and the correlation may be utilized across some modules in an identification unit. For example, geometric parameters, which are obtained by calculations of the serial number detection unit and the character segmentation unit in the MICR signal identification module, may be converted into parameters to be calculated by the serial number detection unit and the character segmentation unit in the OCR signal identification module. The conversion of the parameters costs little time, which is negligible compared with a time spent by the OCR signal identification module on calculating the parameters independently. Besides, a character magnetic signal in the MICR signal identification module has the following advantages: 1, being simple and distinguishable in construction in geometric form, and being very stable; and 2, having a high capability of resisting external disturbances. Thus, the serial number detection unit and the character segmentation unit in the MICR signal identification module have very high accuracy (close to 100%), and an accuracy of parameters obtained by mapping the parameters into the OCR signal identification module is much higher than an accuracy of parameters obtained by the calculation of the OCR signal identification module, thereby guaranteeing an input environment for a follow-up classification determination unit in the OCR signal identification module and improving an identification rate of the OCR signal identification module. Thus, not only a time expense of a system is saved, but also an identification capability of OCR is improved, which enhances a robustness of a mixed identification unit, improves an overall performance of an identification system and makes resources effectively fused and utilized.

It can be assumed that: a time period needed by the serial number detection unit in the MICR signal identification module is $T_{M(1)}$, and a confidence thereof is $p_{M(1)}$; a time period needed by the character segmentation unit in the MICR signal identification module is $T_{M(2)}$, and a confidence thereof is $p_{M(2)}$; a time period needed by the character feature extraction unit in the MICR signal identification module is $T_{M(3)}$, and a confidence thereof is $p_{M(3)}$, and a time period needed by the classification determination unit in the MICR signal identification module is $T_{M(4)}$, and a confidence thereof is $p_{M(4)}$. And it is assumed that: a time period needed by the serial number detection unit in the OCR signal identification module is $T_{O(1)}$ ($T_{O(1)} > T_{M(1)}$), and a confidence thereof is $p_{O(1)}$ ($p_{O(1)} < p_{M(1)}$); a time period needed by the character segmentation unit in the OCR signal identification module is $T_{O(2)}$ ($T_{O(2)} > T_{M(2)}$), and a confidence thereof is $p_{O(2)}$ ($p_{O(2)} < p_{M(2)}$); a time period needed by the character feature extraction unit in the OCR signal identification module is $T_{O(3)}$, and a confidence thereof is $p_{O(3)}$; and a time period needed by the classification determination unit in the OCR signal identification module is $T_{O(4)}$, and a confidence thereof is $p_{O(4)}$. Thus, a total time period needed by a mixed identification unit is expressed as follows:

$$T = T_{M(1)} + T_{M(2)} + T_{M(3)} + T_{M(4)} + T_{O(1)} + T_{O(2)} + T_{O(3)} + T_{O(4)} \qquad (1)$$

and, a confidence of the mixed identification unit is expressed as follows:

$$P = \alpha * p_{O(1)} * p_{O(2)} * p_{O(3)} * p_{O(4)} + \beta * p_{M(1)} * p_{M(2)} * p_{M(3)} * p_{M(4)} \qquad (2),$$

where $\alpha$ is a weighting coefficient of the OCR signal identification module in the mixed identification unit and $\beta$ is a weighting coefficient of the MICR signal identification module in the mixed identification unit, where $\alpha + \beta = 1$.

In a case the geometric parameters, which are obtained by calculations of the serial number detection unit and the character segmentation unit in the MICR signal identification module, are converted into parameters to be calculated by the serial number detection unit and the character segmentation unit in the OCR signal identification module, a time period needed by the process above is $T_{O(M)}$ ($T_{O(M)} << (T_{O(1)} + T_{O(2)})$), and a confidence thereof is $p_{O(M)}$ ($p_{O(M)} = p_{M(1)} * p_{M(2)}$), where $p_{M(1)} * p_{M(2)} > p_{O(1)} * p_{O(2)}$. Thus, a total time period needed by a mixed identification unit adopting an OCR segmentation and positioning method based on multi-cue combination is expressed as follows:

$$T' = T_{M(1)} + T_{M(2)} + T_{M(3)} + T_{M(4)} + T_{O(M)} + T_{O(3)} + T_{O(4)} \qquad (3)$$

and, a confidence of the identification unit is expressed as follows:

$$P' = \alpha * p_{O(M)} * p_{O(3)} * p_{O(4)} + \beta * p_{M(1)} * p_{M(2)} * p_{M(3)} * p_{M(4)} \qquad (4).$$

Apparently, $T'' < T$, and $P' > P$. Thus, not only a time expense of the mixed identification system adopting the OCR segmentation and positioning method based on multi-cue combination is saved, but also an identification capability of the whole identification system is improved.

According to the bill positioning and identification method based on multi-cue combination provided in the embodiment of the invention, by utilizing a coordinate mapping relationship between a one-dimensional MICR magnetic signal and a bill OCR image signal, processed data with a higher confidence in the MICR signal identification module is converted into parameters applicable to the OCR signal identification module by geometric conversion, thereby improving an efficiency and a reliability of OCR character positioning, consequently saving a computation time and improving an OCR identification precision, and improving an accuracy and a processing efficiency of a character identification system.

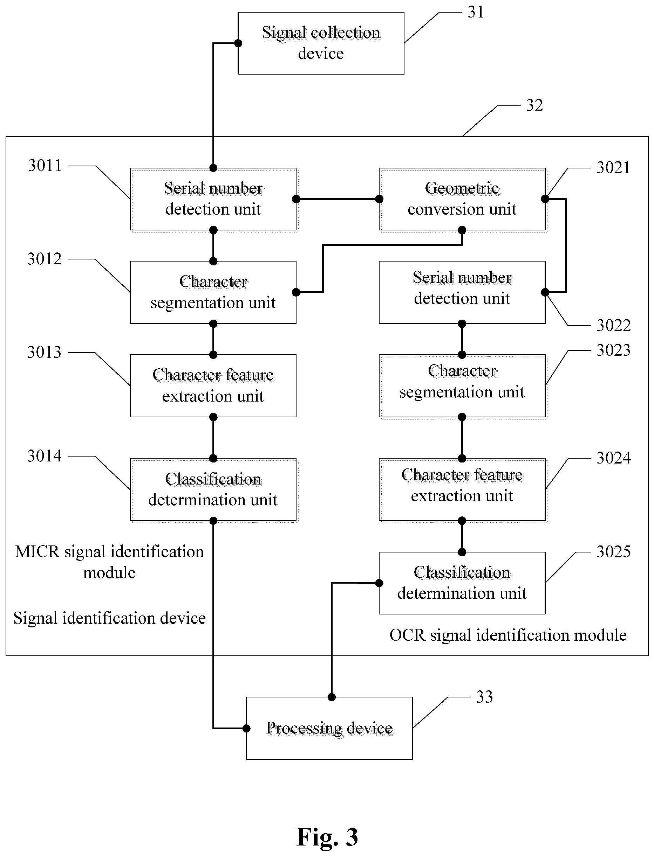

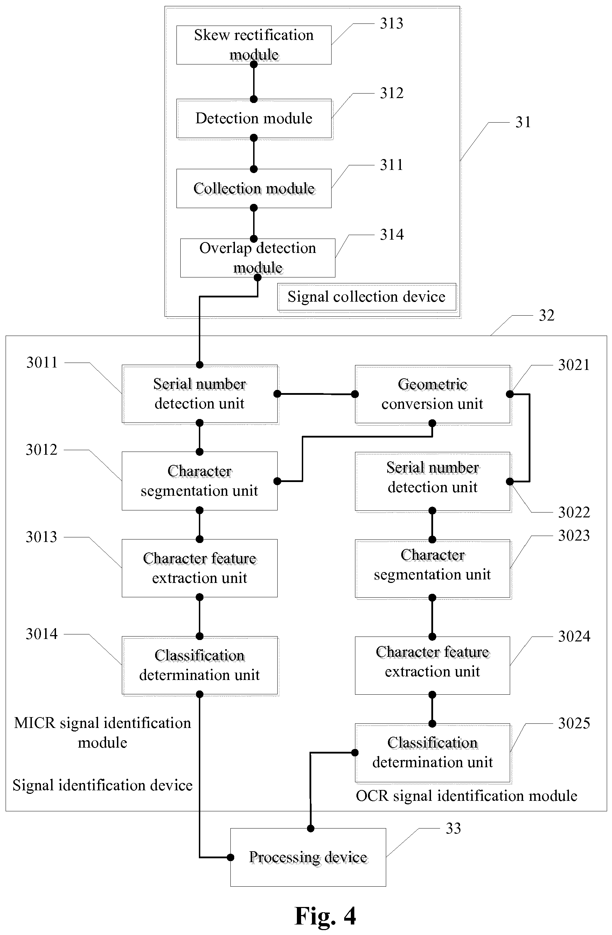

The bill positioning and identification method based on multi-cue combination according to the second embodiment of the invention, especially the process of obtaining a character identification result based on the MICR evaluation score and the OCR evaluation score, is described in detail above. A bill positioning and identification system based on multi-cue combination provided according to an embodiment of the invention is described hereinafter. As illustrated in Figures 3 and 4, the bill positioning and identification system based on multi-cue combination provided according to an embodiment of the invention includes a signal collection device 31, a signal identification device 32 and a processing device 33.

The signal acquisition device 31 includes a collection module 311 and configured to collect an MICR magnetic signal and a CIS image signal of an input bill to obtain collection information.

The signal identification device 32 is connected to the signal collection device 31 and includes an MICR signal identification module 321 and an OCR signal identification module 322.

The MICR signal identification module 321 includes a serial number detection unit 3211, a character segmentation unit 3212, a character feature extraction unit 3213 and a classification determination unit 3214. The serial number detection unit 3211 is configured to perform a serial number detection on the collection information, to obtain a character string geometric position parameter. The character segmentation unit 3212 is configured to perform a character segmentation on the character string geometric position parameter, to obtain character geometric position parameters. The character feature extraction unit 3213 is configured to perform a character feature extraction on the character geometric position parameters, to obtain feature characters. The classification determination unit 3214 is configured to perform a classification determination on the feature characters, to obtain an MICR evaluation score, and the same is stored.

The OCR signal identification module 322 includes a geometric conversion unit 3221, a serial number detection unit 3222, a character segmentation unit 3223, a character feature extraction unit 3224 and a classification determination unit 3225. The geometric conversion unit 3221 is configured to convert the character string geometric position parameter and the character geometric position parameters into OCR character string geometric position parameter adapted to the serial number detection unit 3222 and OCR character geometric position parameters adapted to the character segmentation unit 3223 in the OCR signal identification module by geometric conversion. The character feature extraction unit 3224 is configured to perform a character feature extraction on the OCR character geometric position parameters, to obtain OCR feature characters. The classification determination unit 3225 is configured to perform a classification determination on the OCR feature characters, to obtain an OCR evaluation score, and the same is stored.

The processing device 33 is connected to the signal identification device 32 and configured to obtain an input bill identification result based on the character identification result and process the input bill based on the input bill identification result.

As illustrated in Figure 3, the bill positioning and identification system based on multi-cue combination according to an embodiment of the invention corresponds to the bill position and identification method based on multi-cue combination according to the first embodiment and the second embodiment of the invention, thus having the features of the bill positioning and identification method based on multi-cue combination according to the first embodiment and the second embodiment of the invention, which are not described herein.

Preferably,
the signal acquisition device 31 further includes:

a detection module 312, configured to detect whether the input bill has reached an collection position and trigger a signal collection in a case the input bill has reached the collection position.

Preferably,
the signal collection device 31 further includes:

a skew rectification module 313, configured to perform a skew rectification on the input bill.

Preferably,
the signal acquisition device 31 further includes:

an overlap detection module 314, configured to perform an overlap detection on an input bill.

As illustrated in Figure 4, the signal collection device 31 may include a detection module 311, a skew rectification module 313 and an overlap detection module 313. In addition, the bill positioning and identification system based on multi-cue combination according to the present disclosure may further include a storage module and a control module. Standard data of an input bill is stored in the storage module, and the control module is configured to control and coordinate modules in a system to operate normally, where the storage module and the control module are not described herein for they are included in a conventional system.

According to the bill positioning and identification method based on multi-cue combination and the system thereof provided in the embodiments of the invention, a phenomenon that a magnetic signal is not subject to influences of an bill background pattern and a signature ink, and a coordinate mapping relationship between a one-dimensional MICR magnetic signal and a bill OCR image signal are utilized, processed data with a higher confidence in the MICR signal identification module is converted into parameters applicable to the OCR signal identification module by geometric conversion, thereby improving an efficiency and a reliability of OCR character positioning, consequently saving a computation time and improving an OCR identification precision, and improving an accuracy and a processing efficiency of a character identification system.

With the descriptions of the embodiments above, those in the art can clearly understand that all of or a part of steps of a method provided according to an embodiment can be performed with software plus a necessary universal hardware platform. Based on such understanding, the essence or the part making a contribution to conventional technology of the technical solutions of the invention can be presented in a form of a software product. The computer software product may be stored in a storage medium such as a ROM/RAM, a disk or an optical disc, and includes some instructions for a computer device (which may be a personal computer, a server or a network communications device such as a media gateway, etc) to execute the method described in each embodiment of the invention or in some parts of each embodiment.

It should be noted that the embodiments in the specification are described in a progressive manner, embodiments having same or similar parts can be cross-referenced, and differences between each embodiment and the other embodiments are emphasized. Especially, device and system embodiments are described briefly for they are similar to the method embodiments, and reference can be made to the descriptions in method embodiments for related aspects. The device and system embodiment described above are merely illustrative. The units described as separate components may or may not be physically separate, and components presented as a unit may or may not be a physical unit, which may be located in one position or distributed to multiple network units. A part or all of the modules may be selected as needed to achieve the object of the solutions of the embodiments. Those in the art can understand and implement the invention without any creative work.

The embodiments described above are merely some preferred embodiments of the invention, and shall not be interpreted as limiting the scope of the invention. Any modification, equivalent substitution or improvement made within the spirit and principle of the invention shall fall in the scope of the invention.

**Claims**

**1.** A bill positioning and identification method based on multi-cue combination, comprising:

step S1 comprising collecting an MICR magnetic signal and a CIS (Contact Image Sensor) image signal of an input bill, to obtain collection information;

step S2 comprising performing, by a serial number detection unit in an MICR identification module, a serial number detection on the collection information, to obtain a character string geometric position parameter;

step S3 comprising performing, by a character segmentation unit in the MICR identification module, a character segmentation on the character string geometric position parameter, to obtain character geometric position parameters;

step S4 comprising performing, by a character feature extraction unit in the MICR identification module, a character feature extraction on the character geometric position parameters, to obtain feature characters;

step S5 comprising performing, by a character classification determination unit in the MICR identification module, a classification determination on the feature characters, to obtain and store an MICR evaluation score;

step S6 comprising performing a geometric conversion on the character string geometric position parameter and the character geometric position parameters, to obtain an OCR character string geometric position parameter adapted to a serial number detection unit in an OCR identification module and OCR character geometric position parameters adapted to a character segmentation unit in the OCR identification module, respectively;

step S7 comprising performing, by a character feature extraction unit in the OCR identification module, a character feature extraction on the OCR character geometric position parameters, to obtain OCR feature characters;

step S8 comprising performing, by a character classification determination unit in the OCR identification module, a classification determination on the OCR feature characters, to obtain and store an OCR evaluation score;

step S9 comprising obtaining a character identification result based on the MICR evaluation score and the OCR evaluation score; and

step S10 comprising obtaining an input bill identification result based on the character identification result, and processing the input bill based on the input bill identification result.

**2.** The bill positioning and identification method based on multi-cue combination according to claim 1, wherein before step S1, the method further comprises:

detecting whether the input bill reaches a collection position, and triggering a signal collection in a case the input bill reaches the collection position.

**3.** The bill positioning and identification method based on multi-cue combination according to claim 1, wherein before the step of detecting whether the input bill reaches the collection position, the method further comprises:

performing a skew rectification on the input bill.

4. The bill positioning and identification method based on multi-cue combination according to any of claims 1 to 3, wherein after step S1and before step S2, the method further comprises:

   performing an overlap detection on the input bill, and performing a bill overlap processing on the input bill in a case the input bill is overlapped, otherwise performing step S2.

5. The bill positioning and identification method base on multi-cue combination according to any of claims 1 to 3, wherein step S9 comprises:

   calculating confidences of identifications of the input bill by the MICR identification module and the OCR identification module; and
   determining an evaluation score of an identification module with a higher confidence to be a character identification result of the input bill.

6. The bill positioning and identification method based on multi-cue combination according to any of claims 1 to 3, wherein step S10 comprises:

   performing an authenticity verification on the character identification result to obtain an input bill identification result; and
   accepting the input bill in a case the input bill identification result is true, otherwise performing a rejection operation.

7. A bill positioning and identification system based on multi-cue combination, comprising:

   a signal collection device, comprising a collection module and configured to collect an MICR magnetic signal and a CIS image signal of an input bill to obtain collection information;
   a signal identification device, connected to the signal collection device and comprising an MICR signal identification module and an OCR signal identification module;
   wherein the MICR signal identification module comprises a serial number detection unit, a character segmentation unit, a character feature extraction unit and a classification determination unit; wherein the serial number detection unit is configured to perform a serial number detection on the collection information, to obtain a character string geometric position parameter; the character segmentation unit is configured to perform a character segmentation on the character string geometric position parameter, to obtain character geometric position parameters; the character feature extraction unit is configured to perform a character feature extraction on the character geometric position parameters, to obtain feature characters; and the classification determination unit is configured to perform a classification determination on the feature characters, to obtain and store an MICR evaluation score; and
   wherein the OCR signal identification module comprises a geometric conversion unit, a serial number detection unit, a character segmentation unit, a character feature extraction unit and a classification determination unit; wherein the geometric conversion unit is configured to perform a geometric conversion on the character string geometric position parameter and the character geometric position parameters, to obtain an OCR character string geometric position parameter adapted to the serial number detection unit in the OCR signal identification module and OCR character geometric position parameters adapted to the character segmentation unit in the OCR signal identification; the character feature extraction unit is configured to perform a character feature extraction on the OCR character geometric position parameters, to obtain OCR feature characters; and the classification determination unit is configured to perform a classification determination on the OCR feature characters, to obtain and store an OCR evaluation score; and
   a processing device, connected to the signal identification device and configured to obtain an input bill identification result based on the character identification result and process the input bill based on the input bill identification result.

8. The bill positioning and identification system based on multi-cue combination according to claim 7, wherein the signal collection device further comprises:

   a detection module, configured to detect whether the input bill reaches an collection position and trigger a signal collection in a case the input bill reaches the collection position.

9. The device for detecting a magnetic signal of an input bill according to claim 7, wherein the signal collection device further comprises:

a skew rectification module, configured to perform a skew rectification on the input bill.

10. The device for detecting a magnetic signal of an input bill according to claim 7, wherein the signal collection device further comprises:

an overlap detection module, configured to perform an overlap detection on the input bill.

| Collecte an MICR magnetic signal and a CIS image signal of an input bill, to obtain collection information | S1 |

↓

| Perform a serial number detection on the collectio information by a serial number detection unit in an MICR identification module, to obtain a character string geometric position parameter | S2 |

↓

| Perform a character segmentation on the character string geometric position parameter by a character segmentation unit in the MICR identification module, to obtain character geometric position parameters | S3 |

↓

| Perform a character feature extraction on the character geometric position parameters by a character feature extraction unit in the MCIR identification module, to obtain feature characters | S4 |

↓

| Perform a character classification determination on the feature characters by a character classification determination unit in the MCIR identification module, to obtain and store an MICR evaluation score | S5 |

↓

| Perform a geometric conversion on the character string geometric position parameter and the character geometric position parameters, to obtain OCR character string geometric position parameter adapted to a serial number detection unit and OCR character geometric position parameters adapted to a character segmentation unit in an OCR identification module, respectively | S6 |

↓

| Perform a character feature extraction on the OCR character geometric position parameters by a character feature extraction unit in the OCR identification module, to obtain OCR feature characters | S7 |

↓

| Perform a classification determination on the OCR feature characters by a character classification unit in the OCR identification module, to obtain and store an OCR evaluation score | S8 |

↓

| Obtain a character identification result based on the MICR evaluation score and the OCR evaluation score | S9 |

↓

| Obtain an input bill identification result based on the character identification result, and process the input bill based on the input bill identification result | S10 |

**Fig. 1**

| Perform a skew rectification on an input bill | — 201 |
|---|---|

↓

| Detect whether the input bill has reached an acquisition position and trigger a signal acquisition in a case the input bill has reached the acquisition position | — 202 |
|---|---|

↓

| Acquire an MICR magnetic signal and a CIS image signal of an input bill, to obtain acquired information | — 203 |
|---|---|

↓

| Perform a serial number detection on the acquired information by a serial number detection unit in an MICR identification module, to obtain character string geometric position parameters | — 204 |
|---|---|

↓

| Perform a character segmentation on the character string geometric position parameters by a character segmentation unit in the MICR identification module, to obtain character geometric position parameters | — 205 |
|---|---|

↓

| Perform a character feature extraction on the character geometric position parameters by a character feature extraction unit in the MCIR identification module, to obtain feature characters | — 206 |
|---|---|

↓

| Perform a character classification determination on the feature characters by a character classification determination unit in the MCIR identification module, to obtain and store an MICR evaluation score | — 207 |
|---|---|

↓

| Convert the character string geometric position parameters and the character geometric position parameters into OCR character string geometric position parameters and OCR character geometric position parameters required by a serial number detection unit and a character segmentation unit in an OCR identification module by geometric conversion, respectively | — 208 |
|---|---|

↓

| Perform a character feature extraction on the OCR character geometric position parameters by a character feature extraction unit in the OCR identification module, to obtain OCR feature characters | — 209 |
|---|---|

↓

| Perform a classification determination on the OCR feature characters by a character classification unit in the OCR identification module, to obtain and store an OCR evaluation score | — 210 |
|---|---|

↓

| Obtain a character identification result based on the MICR evaluation score and the OCR evaluation score | — 211 |
|---|---|

↓

| Obtain an input bill identification result based on the character identification result, and process the input bill based on the input bill identification result | — 212 |
|---|---|

**Fig. 2**

Fig. 3

Fig. 4

## INTERNATIONAL SEARCH REPORT

| International application No. |
| --- |
| **PCT/CN2014/088898** |

**A. CLASSIFICATION OF SUBJECT MATTER**

G07D 7/00 (2006.01) i; G06K 9/00 (2006.01) i
According to International Patent Classification (IPC) or to both national classification and IPC

**B. FIELDS SEARCHED**

Minimum documentation searched (classification system followed by classification symbols)

G07D, G06K

Documentation searched other than minimum documentation to the extent that such documents are included in the fields searched

Electronic data base consulted during the international search (name of data base and, where practicable, search terms used)

CNABS, CNTXT, VEN, USTXT: character, cis, character string position, position, boundary, mapping, position relationship, hybrid recognition, banknote, bill, check, magnetic, micr, ocr, image, picture, pattern, optic+, geometric position, geometirc feature, character position, character string, coordination, postion, area, zone, region, link, relevant, match+, convert+, conversion, transform+, transition

**C. DOCUMENTS CONSIDERED TO BE RELEVANT**

| Category* | Citation of document, with indication, where appropriate, of the relevant passages | Relevant to claim No. |
| --- | --- | --- |
| A | CN 1776713 A (INTERNATIONAL BUSINESS MACHINES CORPORATION), 24 May 2006 (24.05.2006), description, pages 8-10, and figures 1-2 | 1-10 |
| A | US 8155425 B1 (MICROSYSTEMS TECHNOLOGY INC.), 10 April 2012 (10.04.2012), the whole document | 1-10 |
| A | US 2007064991 A1 (ELECTRONIC IMAGING SYSTEMS CORP.), 22 March 2007 (22.03.2007), the whole document | 1-10 |
| A | US 2004217170 A1 (YUJI, T. et al.), 04 November 2004 (04.11.2004), the whole document | 1-10 |
| A | US 2003161523 A1 (INT BUSINESS MACHINES CORP.), 28 August 2003 (28.08.2003), the whole document | 1-10 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 February 2015 (09.02.2015) | **26 February 2015 (26.02.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **KE, Jingjie** Telephone No.: (86-10) **62085824** |
| --- | --- |

Form PCT/ISA/210 (second sheet) (July 2009)

## INTERNATIONAL SEARCH REPORT

International application No.

**PCT/CN2014/088898**

**C (Continuation).    DOCUMENTS CONSIDERED TO BE RELEVANT**

| Category* | Citation of document, with indication, where appropriate, of the relevant passages | Relevant to claim No. |
|-----------|-----------------------------------------------------------------------------------|------------------------|
| A | US 2005094861 (INT BUSINESS MACHINES CORP.), 05 May 2005 (05.05.2005), the whole document | 1-10 |
| PX | CN 103996239 A (GRG BANKING EQUIPMENT CO., LTD.), 20 August 2014 (20.08.2014), claims 1-10 | 1-10 |

Form PCT/ISA/210 (continuation of second sheet) (July 2009)

## INTERNATIONAL SEARCH REPORT
### Information on patent family members

International application No.

**PCT/CN2014/088898**

| Patent Documents referred in the Report | Publication Date | Patent Family | Publication Date |
|---|---|---|---|
| CN 1776713 A | 24 May 2006 | US 2006104498 A1 | 18 May 2006 |
| | | US 7480403 B2 | 20 January 2009 |
| | | JP 4841227 B2 | 21 December 2011 |
| | | CN 100350422 C | 21 November 2007 |
| | | JP 2006146901 A | 08 June 2006 |
| US 8155425 B1 | 10 April 2012 | None | |
| US 2007064991 A1 | 22 March 2007 | US 7366339 B2 | 29 April 2008 |
| US 2004217170 A1 | 04 November 2004 | JP 4438387 B2 | 24 March 2010 |
| | | US 6986464 B2 | 17 January 2006 |
| | | JP 2004259254 A | 16 September 2004 |
| US 2003161523 A1 | 28 August 2003 | US 7295694 B2 | 13 November 2007 |
| US 2005094861 | 05 May 2005 | None | |
| CN 103996239 A | 20 August 2014 | None | |

Form PCT/ISA/210 (patent family annex) (July 2009)